# EUROPEAN PATENT SPECIFICATION

(11) **EP 2 606 653 B1**
(45) Date of publication and mention of the grant of the patent: **01.07.2015**
(21) Application number: 11784527.1
(22) Date of filing: 27.09.2011
(51) Int. Cl.: H04Q 9/00, B60D 1/26

(54) **IDENTIFICATION AND RECOGNITION DEVICE FOR ANCILLARIES OF AGRICULTURAL VEHICLES**
IDENTIFIZIERUNGS- UND ERKENNUNGSVORRICHTUNG FÜR HILFSVORRICHTUNGEN LANDWIRTSCHAFTLICHER FAHRZEUGE
DISPOSITIF D'IDENTIFICATION ET DE RECONNAISSANCE D'ACCESSOIRES POUR DES ENGINS AGRICOLES

(43) Date of publication of application: 26.06.2013
(73) Proprietor: C.O.B.O. S.p.A., 25024 Leno (BS) (IT)
(72) Inventor: MAINARDI, Gino, 43039 Salsomaggiore Terme (Parma) (IT)
(74) Representative: Tarabbia, Luigi
(86) International application number: PCT/IT2011/000334
(87) International publication number: WO 2013/046237

(56) References cited:
- EP-A1- 2 116 400
- WO-A1-2005/111750
- US-A1- 2003 233 189
- US-A1- 2007 225 872

## Description

The present invention relates to an identification and recognition apparatus installable on agricultural vehicles (such as common tractors or wheeled and/or tracked drawing vehicles) and more particularly installable on ancillaries or agricultural machinery connectable to tractors / drawing vehicles.

As is known, mechanized operations in modern agriculture are usually implemented via one or more functional appendage tools (ploughs, tree shakers, irrigators, manure-spreaders, and so on), which in turn are pushed or pulled by tractors, which might even provide these tools with the mechanical and/or electrical and/or hydraulic power required.

For example, it is known from EP2116400 a control system dedicated to the connection of a power-driven machinery to a tractor (10): by means of this process, a sequence of signals is emitted, during an operative time, in order to allow continuous check of the working conditions of the machinery connected to the tractor.

It is also known from WO2005/111750 a system for automatically adjusting parameters of a lifting device for a material to be lifted, wherein an interrogator module reads data from a data tag attached to an object and wherein the data exchanged are used for adjusting the parameters of the lifting device for a particular weight of the object to be raised.

Finally, it is known from US2007/225872 a system and method for associating a vehicle to a trailer: this system relies on sensors that transmit information wirelessly to a tractor display unit and which essentially collect and communicate cinematic and dynamic parameters of the trailer during its motion, and provision i salso made for implementation of a synchronizing signal between the vehicle and the trailed to adapt the entire system to particular conditions (e.g. generation of energy by an auxiliary onboard power system, turn signal, or braking operation performed by the driver of the vehicle).

Furthermore, it is known from US 2003/0233189 a system and method for tracking the position of tractors and trailers using RFID.

In the most recently-developed agricultural machinery, setting the optimal operating conditions for a tractor/main ancillary coupling are determined using a sort of "dialogue" between the tractor itself (which is managed by an operator) and the main ancillary connected thereto: in practice this dialogue involves an automated exchange of information between the electronic management of the main ancillary and an interface integrated with the main on-board electronics of the tractor: in this way, the optimal operating parameters (advancing speed of the tractor on the ground, power provided to the main ancillary, and so on) are rapidly determined and calculated for each possible different agricultural task to be performed.

In order to ensure this exchange of information, the connection between the tractor/drawing vehicle and the main ancillary takes place, in known technical systems, via a special bus consisting of a physical connection, along which detection signals and operational parameters of the ancillaries themselves are carried: this physical connection is therefore effective only from the moment at which the main ancillary is connected to the tractor, and can occur only when both the tractor and the main ancillary have an on-board electronics system that comprises the above-mentioned bus.

The above-mentioned prior art, although currently gaining wide distribution on the market, has a major drawback in terms of applicational flexibility.

In fact, if the tractor/drawing vehicle does not have on-board electronics compatible with the electronics on the ancillaries available or should neither the tractor nor any of the available ancillaries in the farm have electronic equipment at all, not only is the automated optimization of working conditions subtantially impossible, but so is the mere setting-up of the same. In other words, if the tractor and/or the main ancillaries connected to it do not possess a main on-board electronics that is compatible with the requirements of the data interchange bus as described above, it is almost impossible for the tractor operator to make an automated and accurate determination of the optimum operating conditions of the tractor-plus-ancillary coupling.

The above-mentioned problem is of great importance in terms of farm management, where several items of machinery can be present, in terms of both tractors/drawing vehicles and ancillaries, in the general sense. Typically, this type of machineries may even be obsolete, or in any case may have a very long working life, so it would therefore be inappropriate, from a management standpoint, to get rid of the entire fleet of agricultural machinery and acquire and use only machinery having the electronic communications bus described above.

In addition to the above, it should also be noted that the data interchanges between the tractor and ancillary of known type discussed up to this point are indeed possible only if the operating parameters and the details relating to the ancillaries themselves are pre-loaded into special areas of memory of the on-board electronics: if the tractor and/or ancillary are physically connectable to each other but unable to use the data, is inevitably impossible to establish a real dialogue (and therefore automated determination of the operating conditions of the tractor-plus-ancillary pair).

A further drawback related to the above-mentioned known technology is due to the fact that the bus interchange data between the tractor and ancillaries requires a "physical" connection (i.e. based on passing the signal through conductor wires): this connection provides a material connection and above all foresees the presence of cable elements between the tractor and the main ancillary, and this can cause a cable breakage, entanglement (in the work environment or on particular parts of the tractor or main ancillary), as well as wear/exposure/ contamination by external agents on physical interconnection points of the bus itself.

The present invention has the aim of providing an identification and recognition apparatus .that can be installed on tractors and a predetermined number (arbitrary) of ancillaries able to obviate the above limitations.

The present invention has the aim of providing an identification and recognition apparatus that can be installed and operatively associated with any tractor/drawing vehicle and/or the main ancillary, regardless of the presence (or type) of on-board electronics.

The present invention also has the aim of providing an apparatus that can be used to detect, identify and create parameters for various tractors and/or different ancillaries, enabling them to communicate among themselves and thus enabling the operator of the tractor to obtain automatic recognition of the primary ancillary that is to be attached to the tractor time-by-time even if the tractor and/or main ancillary are not originally equipped with any type of on-board electrical plants.

A further aim of the present invention is to provide an identification and recognition apparatus that it is completely free of structural limits relating to the mode of transport of the signals, and in particular that this mode should not be linked to the presence of physical connections such as cables or the like for enabling dialogue between the various functional units.

A further aim of the present invention is to realise an apparatus that can have considerable functional integration, and in particular which can be integrated (even at the level of simple software features or with a limited number of additional hardware components) in already-existing electronic devices that are dedicated to other functions.

The specified technical task and the set aims are substantially attained by an identification and recognition apparatus of ancillaries for agricultural tractors and similar vehicles, having the characteristics given in one or more of the accompanying claims.

A description of a preferred but not exclusive embodiment will now be made, by way of non-limiting example, illustrated in the accompanying drawings, in which:

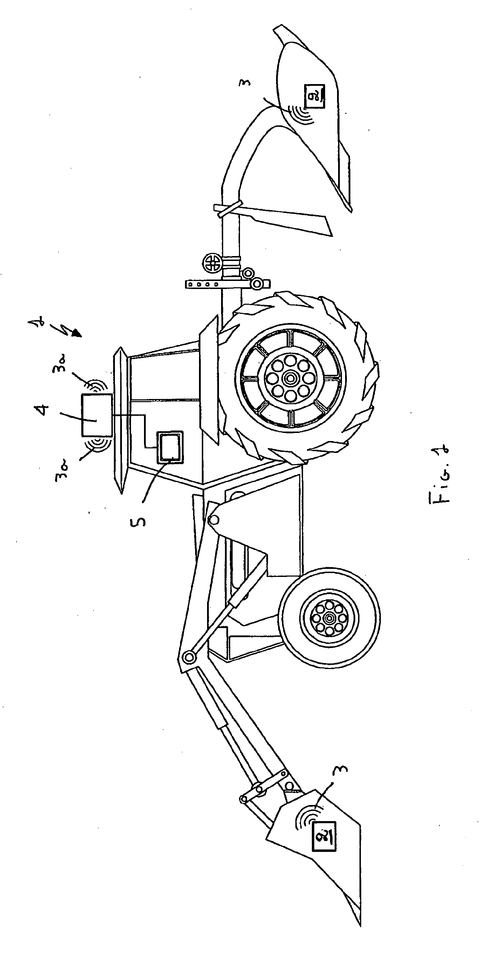

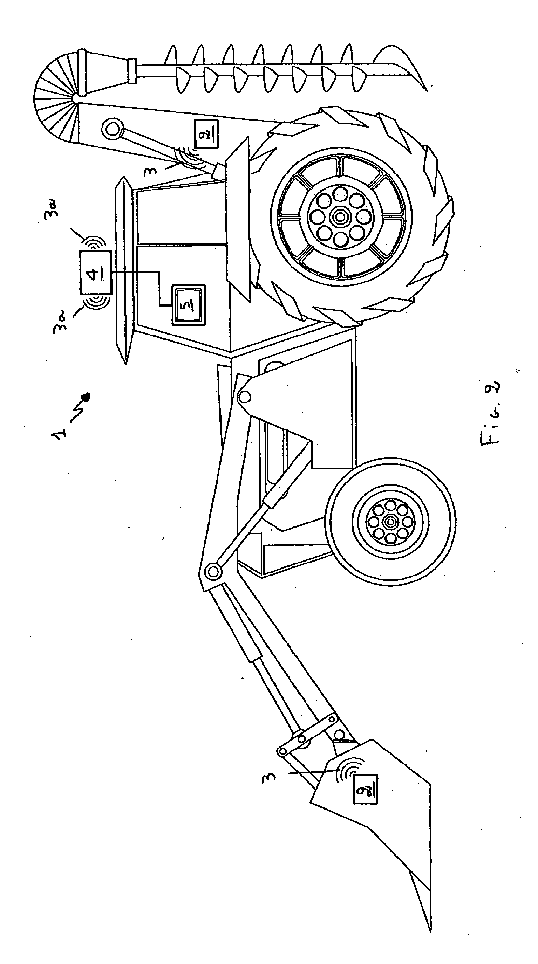

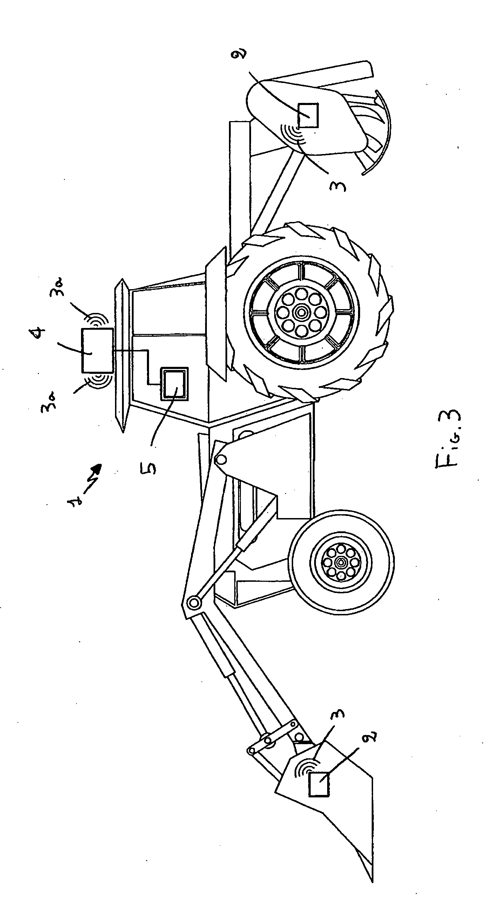

- figures 1, 2 and 3 are schematic lateral views of several possible tractor-plus-ancillary sets provided with the apparatus according to the invention.

With reference to the accompanying figures of the drawings, the identification and recognition apparatus according to the present invention is denoted by reference number 1 and essentially comprises at least a unit that can be described as a slave unit 2 and a least a unit that can be defined as a master 4.

The slave unit 2 is installable on a main ancillary U (which in practice can be any kind of agricultural machinery, associable to/installable on the structure of a tractor or simply associable to/connectable to the tractor but equipped with autonomous wheels or tracks, depending on the work needs of the tractor operators): the slave unit 2 is advantageously suitable for generating a detection signal 3, which basically uniquely defines (and then "identifies") the main ancillary U itself.

For its part, the master unit 4 is installable on the tractor T (and is more or less integrable in the on-board electrical plants, but it can also function as an autonomous electronic system) and is suitable for processing a predetermined main data packet uniquely correlated to the main ancillary U at least as a function of the detection signal 3.

The positioning of the master unit 4 can be chosen in any manner, depending on the needs of the moment: for example, the master unit 4 can be placed at the centre-line of the tractor T and preferably on the roof of the driving cabin, such as to be in a position to best guarantee to transmit and/or receive at least the detection signal 3 or perform other additional functions (such as the calculation of centre of gravity of the vehicle and the vehicle trim in terms of roll/pitch/yaw angles).

For the purposes of the present invention, it should be noted that the expression "data packet" is intended to mean a set of qualitative and/or quantitative information related to different structural or functional characteristics of the ancillary U: for example, for a connectable agricultural machinery, the following can be considered: the position of its centre of gravity, its overall dimensions, the ideal advancement speed, likely absorption of mechanical or hydraulic or electrical power and so on.

The apparatus also includes means operatively connected between the slave unit 2 and the master unit 4 such as to transmit at least the detection signal (3): the connecting means advantageously include items such as transmitting and receiving elements associable to the slave unit 2 and the master unit 4 such as to convey the detection signal 3 in wireless mode between the slave unit 2 and the master unit 4.

At this point the difference between this invention and the above-presented prior art should be specified: in fact, thanks to the conveying modes of the signal 3, the absence of physical connections enables establishment of a dialogue/data exchange between the ancillary U and the tractor T although one of these two objects is not provided with the physical data transmission bus (and therefore, even if the ancillary U is not physically connectable to the data interchange bus integrated into the tractor T).

In more detail; in the present invention it should be noted that the connecting means can be made such as to transmit (at least) the detection signal 3 via "field action" which does not envisage the use of physically materialised vectors: for example, according to the needs of the moment, acoustic pressure waves can be chosen (even at frequencies not audible to humans) and/or by means of electromagnetic waves (radio or light waves, such as for example infrared rays or in any case outside the visible spectrum): all these possible operational choices can in fact be transmitted without physical media (cable, fibre optics and like devices) interposed between the slave unit 2 and the master unit 4.

In an illustrative embodiment of the present invention, the connecting means are suitable for transmitting the detection signal 3 using radio waves. Depending on the type of transmitters and/or receivers usable in the slave unit 2and in the master unit 4, the transmission can be either analog or digital.

From a functional point of view, the detection signal 3 includes, in its essential form, a main identification parameter: the main identification parameter is uniquely related to the main ancillary U is emitted/transmitted by the slave unit 2, then to be received and recognised by the master unit 4.

Note also that the main identification parameter can also be indicative of a mere signal of presence or proximity, which is emitted/transmitted by the slave unit 2 independently of the presence/proximity of any receiver unit: in any case, for the purposes of the present invention, in order to perform ancillary recognition U, this identification parameter must be correlated with the data packet relative to the ancillary U on which the slave unit 2 is installed.

As for the main data packet of the main ancillary U, it can be stored in the master unit 4 or can be emitted/transmitted by the slave unit 2 (as long as the greater energy consumption for transmitting a signal is acceptable), such as to be received and recognised by the master unit 4: in both cases, the present invention requires a correspondence (or in other words, a unique correlation) of the main identification parameter, uniquely related to the main ancillary U with the main data packet of the main ancillary U itself.

The present invention may also perform additional technical functions, thanks to the possible presence of suitable control and management means operatively associated with the slave unit 2 and/or the master unit 4: the control and management means can be implemented in hardware and/or software mode and are at least capable of determining the following conditions:
- a transmission protocol (for example, a given composition of the radio signal according to the RDS protocol or bluetooth or under any other set of rules), and/or
- a protocol for encrypting and/or de-encrypting the detection signal 3, and/or
- a temporal frequency of emission/transmission of the detection signal 3 (the temporal frequency can advantageously be varied according to predetermined conditions in order to achieve energy savings in the slave unit 2), and/or
- a cycle of swtitching on and off the slave unit 2 and/or master unit 4 (again such as to obtain an optimization of energy consumption of the entire apparatus 1 or in any case to avoid unnecessary functioning when the tractor T or the ancillary U are not used), and/or
- a confirmation signal 3a sendable to the slave unit 2 by the master 4 as a result of receiving the detection signal 3 (note that this signal 3a is optional and can be useful should a two-way communciation be necessary between the salve unit 2 and the master unit 4, for example should it be desired to perform a remote re-programming or reset of the slave unit 2).

With reference to the optional character of the confirmation signal 3a, it should be noted that in its simplest embodiment the present invention exhibits a one-way transmission of radio waves (or more generally, of the detection signal 3): this direction starts with the slave unit 2 and ends with the master unit 4.

With regard to the generation, emission and reception of the detection signal 3, the present invention can advantageously include energy supply means, which are associated to the slave unit 2 or the master unit 4 and depending on the needs of the moment these can be achieved in several ways. For example, connections to electrical on-board plants of the tractor T or the main ancillary U can be used (connections to circuit generators, to low power branches, battery/storage units of the tractor T and/or the ancillary U and so on), or both the master unit 4 and the slave unit 2 can be provided with autonomous batteries integrated into the structure thereof, thus without taking any energy from the tractor T or the ancillary U.

The present invention may also comprise energy supply means by remote induction, which include the presence of an electromagnetic wave energy emitter typically housed in the master unit 4, and a receiver of said electromagnetic wave energy housed the slave unit 2: by exploiting and "tuning" the emitter and the receiver accurately energy can be transferred by electromagnetic induction, and the slave unit 2 can be powered indefinitely, in terms of time, even in the absence of battery or generation means of energy directly to elements housed directly inside the unit.

Alternatively, it may be possible to source the energy to power the slave unit 2 or the master unit 4 by exploiting the effects deriving from use of the ancillary U: for example, it may be possible to use piezoelectric current generators in order to transform the vibrations of the different machinery/ancillaries into electricity, or current generators by thermoelectric effect might be used (for example, Seebeck effect or Peltier effect) and/or current generators by induction or Hall effect.

As regards the above embodiments, it should be observed that while the master unit 4 can advantageously be connected to the electrical plant of the tractor, such as to continuously receive the energy required for its processing operations, the slave unit 2 is associated to ancillaries that may not be equipped with on-board accumulators or electric generators: in these cases, a feature of the present invention is directed at ensuring sufficient energy autonomy of the slave unit 2 itself, or at least at guaranteeing a useful working life (in transmission) of at least a few years of continuative installation/association to a ancillary U.

Once more from the point of view of the power supply to the slave unit 2, it can be observed that the present invention can include any combination of the various types of power means presented above: in addition, to further extend the operating autonomy of the slave unit 2, the slave unit 2 itself can be provided with management and selection means of the energy supply.

The management and selection means are therefore active in the slave unit 2 and selectively assign a sourcing of energy from different "supply means" according to the recognition of different operating conditions of the ancillary U and/or the tractor T.

For example, the management and selection means may be able to recognize a "rest" condition (corresponding to a switched-off or non-operative ancillary, or even a ancillary that has been physically disconnected from the tractor T) and a "working" state (corresponding to a switched-on or operative or moving ancillary, or one which has been solidly set in motion with the tractor T) and are able to perform the following selections:
- selecting a primary power means (typically a traditional battery/accumulator already fitted in a slave unit 2), during the working state of the ancillary U, and instead selecting secondary power supply means (for example, a piezoelectric generator fitted in the slave unit 2 or the above-described remote electromagnetic power induction means) during the rest condition of the ancillaries U, or
- selecting one or more supply means (typically a traditional battery/accumulator already fitted in a slave unit 2), during the working state of the ancillary U, and excluding any type of energy supply to the slave unit 2 during the rest condition of the ancillary U.

Thanks to these two possible operating logics, which can also be implemented either alternatively and in appropriate coordination, it is advantageously possible to maximize the duration of the charge present in any accumulators/batteries fitted in the slave unit 2, which are thus exploited only when the ancillary U is working (and then only when there is a need for effective data interchange and "recognition/identification" by the master unit 4).

The parameters indicating the work or rest condition of the ancillary U (and thus the sensors functionally associated to the management and selection means) can be selected in any way as long as they ensure adequate discrimination of the effective state of the ancillary U: for example, it may be based on the perception of ancillary-body vibrations, or detection of displacements and/or acceleration, or any other signal (changes in temperature or pneumatic or hydraulic parameters, and so on).

Note however that the special characteristics of the above-described selection and management means can also be implemented independently of the other characteristics of the present invention.

To enable the tractor operator T to gain immediate feedback on the working/use conditions of a given ancillary U, the present apparatus 1 may advantageously include a ancillary interface 5 subservient to at least a master unit 4 and suitable for visualising at least the main data packet of the main ancillary U to an operator: this ancillary interface can be a terminal or a monitor already on-board the tractor T, and receives (in the appropriate mode) the data packet from the master unit 4.

As already stated above (and as claimed herein below), the slave unit 2 is associable, preferably uniquely and even more preferably unremovably, to a single ancillary (which for convenience of description, can be defined as "the main ancillary U"), while the master unit 4 is associable, for example uniquely, but (for greater operational flexibility) removably, to the tractor T.

In order to make the present apparatus capable of successfully resisting incidental and/or traumatic events that can occur during the working life of the tractor T and the ancillary U, the apparatus 1 also comprises connecting and environmental protecting means respectively interposable between the slave unit 2 and/or the master unit 4 and the main ancillary U and/or the tractor T. Depending on the needs of the moment, the connecting and protection means can be achieved in various ways, such as suitable anti-shock protection, or constraint systems to the external surfaces of the tractor T or ancillary U which also provide the structural connection and protection from external agents and vibrations (for example, consider resin profiles fully superposing the master unit 4 or slave unit 2 and extending over an external portion of the tractor T or ancillary U).

A further object of the present invention is a novel and original identification and recognition method of identification data and/or operating parameters of a main ancillary U associable with a tractor T. This method essentially comprises a first step of collecting a main data packet of a main ancillary U (or possibly a tractor T) and a subsequent phase of storing the main data packet.

The method advantageously also comprises a step of associating a detection signal 3 to the main data packet and a correlated step of notification of the main data packet to a tractor operator T (or who is "indirectly" using the main ancillary U) as a function of a reception of a detection signal 3.

In more detail, the step of collecting of the main data packet can be implemented by first determining a predetermined number of identification data and/or operating parameters of a tractor T and/or a main ancillary U, in order to predispose the ancillary U and the tractor T for an interchange of information: this determination is advantageously made on the ancillary U (or tractor T) when it is made independent of the tractor T, and more generally when the ancillary U has no information pre-stored in its on-board electronics board (or even when the ancillary U has no on-board electronics!).

From an operative standpoint, the determination of the data packet information and/or operating parameters of the ancillary U can be performed by means of the following actions:
- static and/or dynamic measurements (for example, for ancillary U overall dimensions, dynamic performance, geometrical and/or static balancing features and so on);
- arbitrary allocation of data and/or alphanumeric codes (e.g. assigning an identification code or a "storage position" or whatever), or
- fetch of data from information sources related to the tractor T and/or the main ancillary U (e.g. reading and storing use maintenance manuals, and so on).

Storage of identification data and operating parameters in a suitable storage medium are then proceeded with, which will typically be included in a master unit 4. At this point, the detection signal 3 can be associated to the main data packet, for example by performing the following series of sub-steps:
- the detection signal 3 is generated and transmitted from a slave unit 2;
- the detection signal 3 is received in a master unit (4);
- the main data packet that corresponds uniquely to the detection signal 3 received from the memory support master unit (4) is extracted, and finally
- the main data packet is sent to the ancillary interface 5.

If the master unit 4 (and therefore the tractor T on which the unit 4 is mounted) is in an environment where multiple ancillaries are working or are present and suitably equipped with a respective slave unit 2, the present method can be functionally expanded by collecting a predetermined number of complementary data packets uniquely correlated with complementary ancillaries (denoted by UC in the appended figures). At the "multiple" collection of data a predetermined number of detection signals 3 is used, each of which is uniquely correlatable to the above-cited complementary ancillaries UC and, consequently, each of which is uniquely correlatable to the respective data packets.

Subsequently, a so-called "operational ancillary" is identified/determined which in practical terms is the one which has been selected to work in conjunction with the tractor T: the operative ancillary will typically be associated with and/or related and/or enslaved to and/or adjacent to the tractor T.

The operational ancillary is determined according to a selective reception of a corresponding detection signal (3) and/or a notification of a complementary data packet, which corresponds to the operating ancillary involved. In other words, the present method is autonomously able to choose what the ancillary working with the tractor is, and to perform and automatic recognition, with a consequent automated notification to the tractor T operator.

With reference to the last above-described function, it should be noted that the step of identifying and determining the operating ancillary includes a sub-step of discriminating a specific detection signal and/or a data packet according to a decision parameter: this decision parameter may for example comprise at least an indication of minimum distance/proximity between the tractor T and the ancillary U or a so-called "receiving prevalence" of a given detection signal emitted by the slave unit (2) associated with an operational ancillary with respect to other identification signs 3 emitted by complementary ancillaries U arranged in proximity of the tractor T and preferably located in proximity of the master unit 4 (but which were not connected to the tractor T for the purposes of "work").

For maximum clarity of illustration of the present invention, the term "receiving prevalence" is intended to mean a series of situations or environmental conditions in which the master unit 4 is empowered to automatically prefer one detection signal 3 with respect to other detection signals which receives from other ancillaries around: for example, this preference can occur when an operator drives the tractor while hitched and only a single ancillary is moving (the ancillary that will be operational for the particular moment of the work), while other ancillaries remain parked in a rest area. Since this sequence of operations will result in distancing of a ancillary from the others, the master unit 4 (following integrally the tractor T) will detect the persistence of a single detection signal rather than the other signals, which will be weakened by the distancing of the tractor T and the chosen ancillary U with respect to the parking area.

Nevertheless, in the present invention "reception persistance" can be achieved by other methods, such as an increase in the frequency of emission of the signal 3 as a function of relative proximity between the master unit 4 and slave unit 2.

The method described (and claimed below) can advantageously be implemented, even in only a stage thereof, using the apparatus according to the invention.

The invention provides a number of advantages.

In fact, thanks to the unique design concept (based on the master-slave logic), an extremely simple and direct communication can be established between the various elements of the system, with no restrictions on length or type of tractor/drawing vehicle and the main ancillary connected to the tractor; in other words, the present invention obviates the technical drawbacks of the information interchange bus of known type, which are rigidly constrained from both the structural point of view (because of the need for a physical connection) and from the point of view of the communication protocol (which has to be shared in the on-board system of the tractor/ drawing vehicle and the electronics installed on the main ancillary).

Further, the possibility of advance identification of any type of identifying information (optimal operating parameters, identification data, dimensions, size, energy consumption and so on) of any main ancillary, and the possibility of fitting it in the apparatus and associating it uniquely to only one slave unit enables a very wide applicability of the apparatus itself to as many possible combinations of tractors/drawing vehicles as there are ancillaries, especially where there are no time-updated on-board electronic systems or even merely "compatible" systems from the point of view of communication language/programming.

Moreover, the transmission mode used for the interchange of data/signals in this system leads to preventing problems related to the overall dimensions of, and eventual damage to, cables and connectors, and also allows greater positioning freedom of both the master unit and the slave unit (with advantages in terms of transmission reliability, protection from impact/ traumatic events and the durability of the entire system).

Finally, it is noteworthy that with the present invention set-up costs are low, installation and set-up times rapid, functioning highly reliable (as well as not involving particular complications or modifications and adaptations; even on electronic apparatus installable in aftermarket terms), to the full advantage of the overall economy of prodution, increase in offered functions and improvement of the costs/benefits ratio of the product.

## Claims

1. An identification and recognition apparatus for ancillaries of agricultural vehicles, such as tractors/drawing vehicles and the like, comprising:
- at least a slave unit (2) installable on a main ancillary or agricultural machinery (U) associable to a tractor (T), said slave unit (2) being suitable for generating a detection signal (3);
- a master unit (4) installable on said tractor (T) and suitable for processing a predetermined main data packet uniquely correlatable to said main ancillary (U) at least according to said detection signal (3); and
- connecting means operatively active between said slave unit (2) and said master unit (4) for transmitting at least said detection signal (3), said connecting means compriseing transmitting and receiving elements associable to the slave unit (2) and the master unit (4) such as to convey the detection signal (3) in wireless mode between the slave unit (2) and the master unit (4),
said detection signal (3) comprising a main identification parameter uniquely correlated to the main ancillary (U), said main identification parameter being emitted/transmitted by the slave unit (2) and being received and recognised by the master unit (4), said main data packet of said main ancillary (U) being memorised in the master unit (4);
**characterised in that** management and selection means of the energy supply are active in said slave unit (2) and selectively assign a source of energy from different supply means according to the recognition of different operating conditions of the ancillary (U) and/or the tractor (T).

2. The apparatus according to claim 1, wherein the connecting means are suitable for transmitting at least the detection signal (3) via acoustic pressure waves and/or by electromagnetic waves transmitted without physical support between the slave unit (2) and the master unit (4).

3. The apparatus according to claim 1 or 2, wherein the connecting means are suitable for transmitting the detection signal (3) by means of radio waves, said radio waves defining a transmission of an analog or digital type.

4. The apparatus according to any one of the preceding claims from 1 to 3, wherein the detection signal (3) further comprises the main data packet of the main ancillary (U), a main identification parameter uniquely correlated to the main ancillary (U) and/or the main data packet of the main ancillary (U) being emitted/transmitted by the slave unit (2) and being received and recognised by the master unit (4).

5. The apparatus according to any one of the preceding claims, wherein further present are control and management means that are operatively associated to the slave unit (2) and/or to the master unit (4) such as at least to determine:
- a transmission protocol; and/or
- a protocol for encrypting and/or de-encrypting the detection signal (3), and/or
- a temporal frequency of emission/transmission of the detection signal (3) and/or
- a cycle of swtitching on and off the slave units (2) and/or master units (4), and/or
- a confirmation signal (3a) sendable to the slave unit (2) by the master unit (4) as a result of receiving the detection signal (3).

6. The apparatus according to any one of the preceding claims, wherein further present are energy supply means associated to the slave unit (2) or to the master unit (4), said energy supply means preferably comprising:
- connections to on-board electrical plant of the tractor (T) or main ancillary (U); and/or
- piezoelectric current generators; and/or
- current generators by thermo-electric effect; and/or
- current generators by induction.

7. The apparatus according to any one of the preceding claims, wherein a ancillary interface (5) is further present, connected at least the master unit (4) and suitable for visualising, to an operator, at least said main data packet of the main ancillary (U).

8. The apparatus according to any one of the preceding claims, wherein the slave unit (2) is associable, in a preferably unique way and still more preferably unremovably, to the main ancillary (U), and the master unit (4) is associable, in a preferably unique way and still more preferably removably, to the tractor (T), the apparatus (1) further comprising connecting and environmental protection means respectively interposable between the slave unit (2) and/or the master unit (4) and the main ancillary (U) and/or the tractor (T).

9. A recognition and detection method of identification data and/or operating parameters of a main ancillary (U) associable to a tractor (T), comprising following steps:
- collecting a main data packet of a main ancillary (U) and/or of a tractor (T);
- memorising said main data packet;
- associating a detection signal (3) to the main data packet; and
- notifying the main data packet to an operator of the tractor (T) and/or the main ancillary (U) as a function of receiving said detection signal (3),
- collecting a predetermined number of complementary data packets uniquely correlatable to complementary ancillaries (UC);
- defining a predetermined number of detection signals (3) uniquely correlatable to said complementary ancillaries (UC) and preferably correlatable to respective data packets; and
- identifying and determining an operative ancillary (U) associated to and/or connected to and/or serving and/or adjacent to the tractor (T) as a function of a selective reception of an identification signal (3) and/or of a notification of a complementary data packet.
**characterised in that** it further comprises the step of selectively assign a source of energy to the slave unit (2) from different supply means according to the recognition of different operating conditions of the ancillary U and/or the tractor T.

10. The method according to claim 9, wherein the step of collecting a main data packet of a main ancillary (U) and/or of a tractor (T) comprises following sub-steps:
- determining a predetermined number of identification data and/or operating parameters of a tractor (T) and/or a main ancillary (U) by means of measurements that are static and/or dynamic and/or by arbitrary allocation and/or by means of collecting from data sources that are correlatable to the tractor (T) and/or the main ancillary (U), the tractor (T) and/or the main ancillary (U) being preferably independent of one another at least during the present sub-step; and
- memorising the identification data in a memory support, said memory support being preferably included in a master unit (4).

11. The method according to claim 10, wherein said step of associating the detection signal (3) to the main data packet comprises following sub-steps:
- generating and transmitting the detection signal (3) preferably from a slave unit (2);
- receiving the detection signal (3) in a master unit (4);
- extracting the main data packet from the memory support of the master unit (4); and
- sending the packet to an ancillary interface (5).

12. The method according to claim 9, wherein the step of identifying and determining an operative ancillary comprises a sub-step of discriminating a specific detection signal and/or a data packet according to a decisional parameter, said decisional parameter further comprising at least:
- an indication of a minimum distance/proximity between the tractor (T) and the ancillary (U); and/or
- a prevalence of reception of a given detection signal (3) emitted by the slave unit (2) associated to the operative ancillary with respect to other detection signals (3) emitted by complementary ancillaries (U) located in proximity of the tractor and preferably in proximity of the master unit (4).

13. The method according to any one of the preceding claims from 9 to 12, wherein at least a step of the method is actuated by means of an apparatus according to any one of claims from 1 to 9.

## Patentansprüche

1. Identifizierungs- und Erkennungsvorrichtung für Hilfsvorrichtungen landwirtschaftlicher Fahrzeuge wie Traktoren/Zugmaschinen u. Ä., umfassend:
- mindestens eine untergeordnete Einheit (2), die an einer Haupthilfsvorrichtung oder landwirtschaftlichen Maschine (U) montierbar ist, die mit einem Traktor (T) verbunden werden kann, wobei diese untergeordnete Einheit (2) geeignet ist, um ein Erfassungssignal (3) zu generieren;
- eine übergeordnete Einheit (4), die am Traktor (T) montierbar und geeignet ist, um ein vorgegebenen Hauptdatenpacket zu verarbeiten, das eindeutig mit der Haupthilfsvorrichtung (U) mindestens nach dem Erfassungssignal (3) korrelierbar ist; und
- Anschlussmittel, die betriebswirksam zwischen der untergeordneten Einheit (2) und der übergeordneten Einheit (4) aktiv sind, um mindestens das Erfassungssignal (3) zu übermitteln, wobei diese Anschlussmittel Sende- und Empfangselemente umfassen, die mit der untergeordneten Einheit (2) und der übergeordneten Einheit (4) verbunden werden können, um das Erfassungssignal (3) drahtlos zwischen der untergeordneten Einheit (2) und der übergeordneten Einheit (4) zu übermitteln,
wobei das Erfassungssignal (3) einen Hauptidentifizierungsparameter umfasst, der eindeutig mit der Haupthilfsvorrichtung (U) korreliert ist, und der Hauptidentifizierungsparameter von der untergeordneten Einheit (2) gesendet/übermittelt und von der übergeordneten Einheit (4) empfangen und erkannt wird, wobei das Hauptdatenpaket der Haupthilfsvorrichtung (U) in der übergeordneten Einheit (4) gespeichert wird;
**dadurch gekennzeichnet, dass** Management- und Auswahlmittel der Energieversorgung in der untergeordneten Einheit (2) aktiv sind und je nach Erkennung unterschiedlicher Betriebsbedingungen der Hilfsvorrichtung (U) und/oder des Traktors (T) selektiv eine Energiequelle unterschiedlicher Versorgungsmittel zuweisen.

2. Vorrichtung nach Anspruch 1, wobei die Anschlussmittel geeignet sind, um mindestens das Erfassungssignal (3) über Schalldruckwellen und/oder elektromagnetische Wellen zu übermitteln, die ohne physikalische Unterstützung zwischen der untergeordneten Einheit (2) und der übergeordneten Einheit (4) übermittelt werden.

3. Vorrichtung nach Anspruch 1 oder 2, wobei die Anschlussmittel geeignet sind, um das Erfassungssignal (3) mittels Funkwellen zu übermitteln und diese Funkwellen eine Übertragung vom analogen oder digitalen Typ definieren.

4. Vorrichtung nach einem der vorhergehenden Ansprüche 1 bis 3, wobei das Erfassungssignal (3) zudem das Hauptdatenpaket der Haupthilfsvorrichtung (U), einen Hauptidentifizierungsparameter, der eindeutig mit der Haupthilfsvorrichtung (U) korreliert ist, und/oder das Hauptdatenpaket der Haupthilfsvorrichtung (U) umfasst, das von der untergeordneten Einheit (2) gesendet/übermittelt und von der übergeordneten Einheit (4) empfangen und erkannt wird.

5. Vorrichtung nach einem der vorhergehenden Ansprüche, wobei zudem Steuerungs- und Managementmittel vorhanden sind, die betriebswirksam mit der untergeordneten Einheit (2) und/oder der übergeordneten Einheit (4) verbunden sind, um mindestens zu bestimmen:
- ein Übertragungsprotokoll und/oder
- ein Protokoll zur Verschlüsselung und/oder Entschlüsselung des Erfassungssignals (3) und/oder
- eine Sende-/Übermittlungszeitfrequenz des Erfassungssignals (3) und/oder
- einen Ein-/Ausschaltzyklus der untergeordneten Einheiten (2) und/oder der übergeordneten Einheiten (4) und/oder
- ein Bestätigungssignal (3a), das von der übergeordneten Einheit (4) als Ergebnis des Empfangs des Erfassungssignals (3) an die untergeordnete Einheit (2) gesendet werden kann.

6. Vorrichtung nach einem der vorhergehenden Ansprüche, wobei zudem Energieversorgungsmittel vorhanden sind, verbunden mit der untergeordneten Einheit (2) oder der übergeordneten Einheit (4), und diese Energieversorgungsmittel vorzugsweise umfassen:
- Anschlüsse an die integrierte Elektroanlage des Traktors (T) oder der Haupthilfsvorrichtung (U) und/oder
- piezoelektrische Stromgeneratoren und/oder
- Stromgeneratoren durch thermoelektrische Wirkung und/oder Stromgeneratoren durch Induktion.

7. Vorrichtung nach einem der vorhergehenden Ansprüche, wobei zudem eine Hilfsschnittstelle (5) vorhanden ist, verbunden mindestens mit der übergeordneten Einheit (4) und geeignet, um einem Bediener mindestens das Hauptdatenpaket der Haupthilfsvorrichtung (U) anzuzeigen.

8. Vorrichtung nach einem der vorhergehenden Ansprüche, wobei die untergeordnete Einheit (2) auf eine vorzugsweise eindeutige Weise und noch besser nicht entfernbar mit der Haupthilfsvorrichtung (U) verbunden werden kann und die übergeordnete Einheit (4) auf eine vorzugsweise eindeutige Weise und noch besser entfernbar mit dem Traktor (T) verbunden werden kann, wobei die Vorrichtung (1) zudem Anschluss- und Umweltschutzmittel umfasst, die jeweils zwischen der untergeordneten Einheit (2) und/oder der übergeordneten Einheit (4) und der Haupthilfsvorrichtung (U) und/oder dem Traktor (T) eingesetzt werden können.

9. Erkennungs- und Erfassungsverfahren zur Identifizierung von Daten und/oder Betriebsparametern einer Haupthilfsvorrichtung (U), die mit einem Traktor (T) verbunden werden kann, umfassend folgende Schritte:
- Erheben eines Hauptdatenpakets einer Haupthilfsvorrichtung (U) und/oder eines Traktors (T);
- Speichern des Hauptdatenpakets;
- Assoziieren eines Erfassungssignals (3) mit dem Hauptdatenpaket und
- Melden des Hauptdatenpakets an einen Bediener des Traktors (T) und/oder der Haupthilfsvorrichtung (U) als eine Funktion des Empfangs des Erfassungssignals (3);
- Erheben einer vorgegebenen Zahl an ergänzenden Datenpaketen, die eindeutig mit den ergänzenden Hilfsvorrichtungen (UC) korreliert werden können;
- Definieren einer vorgegebenen Zahl an Erfassungssignalen (3), die eindeutig mit den ergänzenden Hilfsvorrichtungen (UC) und vorzugsweise mit den jeweiligen Datenpaketen korreliert werden können, und
- Identifizieren und Bestimmen einer Betriebshilfsvorrichtung (U), verbunden mit und/oder angeschlossen an und/oder dienend für und/oder angrenzend an den Traktor (T) als eine Funktion einer selektiven Wiederholung eines Identifizierungssignals (3) und/oder einer Meldung eines ergänzenden Datenpakets;
**dadurch gekennzeichnet, dass** es zudem den Schritt zum selektiven Zuordnen einer Energiequelle an die untergeordnete Einheit (2) von unterschiedlichen Versorgungsmitteln je nach der Erkennung unterschiedlicher Betriebsbedingungen der Hilfsvorrichtung (U) und/oder des Traktors (T) umfasst.

10. Verfahren nach Anspruch 9, wobei der Schritt zum Erheben eines Hauptdatenpakets einer Haupthilfsvorrichtung (U) und/oder eines Traktors (T) folgende Unterschritte umfasst:
- Ermitteln einer vorgegebenen Zahl an Identifizierungsdaten und/oder Betriebsparametern eines Traktors (T) und/oder einer Haupthilfsvorrichtung (U) durch Messungen, die statisch und/oder dynamisch sind und/oder durch willkürliche Zuordnung und/oder durch die Erhebung aus Datenquellen, die mit dem Traktor (T) und/oder der Haupthilfsvorrichtung (U) korreliert werden können, wobei der Traktor (T) und/oder die Haupthilfsvorrichtung (U) vorzugsweise zumindest während dieses Unterschritts unabhängig voneinander sind, und
- Speichern der Identifizierungsdaten in einem Speichermedium, wobei dieses Speichermedium vorzugsweise in der übergeordneten Einheit (4) eingeschlossen ist.

11. Verfahren nach Anspruch 10, wobei der Schritt zum Assoziieren des Erfassungssignals (3) mit dem Hauptdatenpaket folgende Unterschritte umfasst:
- Generieren und Übermitteln des Erfassungssignals (3), vorzugsweise von einer untergeordneten Einheit (2);
- Empfangen des Erfassungssignals (3) in einer übergeordneten Einheit (4);
- Extrahieren des Hauptdatenpakets aus dem Speichermedium der übergeordneten Einheit (4) und
- Senden des Pakets an eine Hilfsschnittstelle (5).

12. Verfahren nach Anspruch 9, wobei der Schritt zum Identifizieren und Ermitteln einer Betriebshilfsvorrichtung einen Unterschritt zum Unterscheiden eines spezifischen Erfassungssignals und/oder eines Datenpakets je nach einem Entscheidungsparameter umfasst, wobei der Entscheidungsparameter zudem mindestens umfasst:
- eine Angabe einer Mindestentfernung/-nähe zwischen dem Traktor (T) und der Hilfsvorrichtung (U) und/oder
- eine Prävalenz beim Empfang eines bestimmten Erfassungssignals (3), das von der mit der Betriebshilfsvorrichtung verbundenen untergeordneten Einheit (2) gesendet wird, im Vergleich zu anderen Erfassungssignalen (3), die von ergänzenden Hilfsvorrichtungen (U) gesendet werden, die sich in der Nähe des Traktors befinden und vorzugsweise in der Nähe der übergeordneten Einheit (4).

13. Verfahren nach einem der vorhergehenden Ansprüche 9 bis 12, wobei mindestens ein Schritt des Verfahrens mittels einer Vorrichtung nach einem der Ansprüche 1 bis 9 durchgeführt wird.

## Revendications

1. Dispositif d'identification et de reconnaissance d'accessoires pour des engins agricoles, tels que des tracteurs/véhicules tracteurs et similaires, comprenant :
- au moins une unité asservie (2) pouvant être installée sur un accessoire principal ou une machine agricole (U) pouvant être associé(e) à un tracteur (T), ladite unité asservie (2) étant adaptée pour générer un signal de détection (3) ;
- une unité maître (4) pouvant être installée sur ledit tracteur (T) et adaptée pour traiter un paquet de données principal corrélable de façon unique au dit accessoire principal (U) au moins selon ledit signal de détection (3) ; et
- des moyens de connexion fonctionnant de façon active entre ladite unité asservie (2) et ladite unité maître (4) pour transmettre au moins ledit signal de détection (3), lesdits moyens de connexion comprenant des éléments de transmission et de réception étant associés à l'unité asservie (2) et à l'unité maître (4) de manière à transmettre le signal de détection (3) dans un mode sans fil entre l'unité asservie (2) et l'unité maître (4),
ledit signal de détection (3) comprenant un paramètre d'identification principal corrélé de façon unique à l'accessoire principal (U), ledit paramètre d'identification principal étant émis/transmis par l'unité asservie (2) et étant reçu et reconnu par l'unité maître (4), ledit paquet de données principal dudit accessoire principal (U) étant mémorisé dans l'unité maître (4) ;
**caractérisé en ce que** des moyens de gestion et de sélection d'alimentation en énergie sont actifs dans ladite unité asservie (2) et attribuent sélectivement une source d'énergie à partir de différents moyens d'alimentation en fonction de la reconnaissance des différentes conditions de fonctionnement de l'accessoire (U) et/ou du tracteur (T).

2. Dispositif selon la revendication 1, dans lequel les moyens de connexion sont adaptés pour transmettre au moins le signal de détection (3) par l'intermédiaire d'ondes de pression acoustiques et/ou d'ondes électromagnétiques transmises sans support physique entre l'unité asservie (2) et l'unité maître (4).

3. Dispositif selon les revendications 1 ou 2, dans lequel les moyens de connexion sont adaptés pour transmette le signal de détection (3) par le biais d'ondes radio, lesdites ondes radio définissant une transmission d'un type analogique ou numérique.

4. Dispositif selon l'une quelconque des revendications précédentes de 1 à 3, dans lequel le signal de détection (3) comprend de plus le paquet de données principal de l'accessoire principal (U), un paramètre d'identification principal corrélé de façon unique à l'accessoire principal (U) et/ou le paquet de données principal de l'accessoire principal (U) étant émis/transmis par l'unité asservie (2) et étant reçu et reconnu par l'unité maître (4).

5. Dispositif selon l'une quelconque des revendications précédentes, dans lequel sont aussi présents des moyens de commande et de gestion étant associés de façon fonctionnelle à l'unité asservie (2) et/ou à l'unité maître (4) de manière à au moins déterminer :
- un protocole de transmission ; et/ou
- un protocole de cryptage et/ou de décryptage du signal de détection (3), et/ou
- une fréquence temporelle d'émission/transmission du signal de détection (3) et/ou
- un cycle d'allumage et d'extinction des unités asservies (2) et/ou des unités maîtres (4), et/ou
- un signal de confirmation (3a) pouvant être envoyé à l'unité asservie (2) par l'unité maître (4) suite à la réception du signal de détection (3).

6. Dispositif selon l'une quelconque des revendications précédentes, dans lequel sont aussi présents des moyens d'alimentation en énergie associés à l'unité asservie (2) ou à l'unité maître (4), lesdits moyens d'alimentation en énergie comprenant de préférence :
- des connexions à l'installation électrique à bord du tracteur (T) ou à l'accessoire principal (U) ; et/ou
- des générateurs de courant piézoélectrique ; et/ou
- des générateurs de courant par effet thermoélectrique ; et/ou - des générateurs de courant par induction.

7. Dispositif selon l'une quelconque des revendications précédentes, dans lequel est aussi présente une interface (5) de l'accessoire reliée au moins à l'unité maître (4) et pouvant être adaptée pour la visualisation, à un opérateur, au moins dudit paquet de données principal de l'accessoire principal (U).

8. Dispositif selon l'une ou plusieurs des revendications précédentes, dans lequel l'unité asservie (2) peut être associée, de préférence d'une façon unique et idéalement de façon inamovible, à l'accessoire principal (U) et l'unité maître (4) peut être associée, de préférence d'une façon unique et idéalement de façon amovible, au tracteur (T), le dispositif (1) comprenant de plus des moyens de protection de l'environnement et de connexion respectivement interposables entre l'unité asservie (2) et/ou l'unité maître (4) et l'accessoire principal (U) et/ou le tracteur (T).

9. Procédé de reconnaissance et de détection de paramètres de fonctionnement et/ou de données d'identification d'un accessoire principal (U) pouvant être associé à un tracteur (T), comprenant les étapes suivantes :
- collecter un paquet de données principal d'un accessoire principal (U) et/ou d'un tracteur (T) ;
- mémoriser ledit paquet de données principal ;
- associer un signal de détection (3) au paquet de données principal ; et
- notifier le paquet de données principal à un opérateur du tracteur (T) et/ou de l'accessoire principal (U) en fonction de la réception dudit signal de détection (3),
- collecter un nombre prédéfini de paquets de données complémentaires pouvant être corrélés de façon unique aux accessoires complémentaires (UC) ;
- définir un nombre prédéfini de signaux de détection (3) pouvant être corrélés de façon unique auxdits accessoires complémentaires (UC) et de préférence pouvant être corrélés aux paquets de données correspondants ; et
- identifier et déterminer un accessoire fonctionnel (U) associé au et/ou, relié au et/ou, intéressé par le et/ou, adjacent au tracteur (T) en fonction d'une réception sélective d'un signal d'identification (3) et/ou d'une notification d'un paquet de données complémentaire.
**Caractérisé en ce qu'**il comprend de plus l'étape consistant à attribuer sélectivement une source d'énergie à l'unité asservie (2) à partir de moyens d'alimentation différents selon la reconnaissance de différentes conditions de fonctionnement de l'accessoire U et/ou du tracteur T.

10. Procédé selon la revendication 9, dans lequel l'étape de collecte d'un paquet de données principal d'un accessoire principal (U) et/ou d'un tracteur (T) comprend les sous étapes suivantes :
- déterminer un nombre prédéfini de données d'identification et/ou de paramètres de fonctionnement d'un tracteur (T) et/ou d'un accessoire principal (U) par le biais de mesures étant statiques et/ou dynamiques et/ou par attribution arbitraire et/ou par le biais d'une collecte de sources de données pouvant être corrélées au tracteur (T) et/ou à l'accessoire principal (U), le tracteur (T) et/ou l'accessoire principal (U) étant de préférence indépendant(s) l'un de l'autre au moins durant la présente sous étape ; et
- mémoriser les données d'identification dans un support de mémoire, ledit support de mémoire étant de préférence inclus dans une unité maître (4),

11. Procédé selon la revendication 10, dans lequel ladite sous étape consistant à associer le signal de détection (3) au paquet de données principal comprend les sous étapes suivantes :
- générer et transmettre le signal de détection (3) de préférence à partir d'une unité asservie (2) ;
- recevoir le signal de détection (3) dans une unité maître (4) ;
- extraire le paquet de données principal du support de mémoire de l'unité maître (4) ; et
- envoyer le paquet à une interface d'accessoire (5).

12. Procédé selon la revendication 9, dans lequel l'étape d'identification et de détermination d'un accessoire fonctionnel comprend une sous étape consistant à discerner un signal de détection spécifique et/ou un paquet de données selon un paramètre décisionnel, ledit paramètre décisionnel comprenant de plus au moins :
- une indication d'une distance minimum/de proximité entre le tracteur (T) et l'accessoire (U) ; et/ou
- une prévalence de réception d'un signal de détection donné (3), émis par l'unité asservie (2), associé à l'accessoire fonctionnel par rapport aux autres signaux de détection (3) émis par les accessoires complémentaires (U) situés à proximité du tracteur et de préférence à proximité de l'unité maître (4).

13. Procédé selon l'une quelconque des revendications précédentes de 9 à 12, dans lequel au moins une étape du procédé est actionnée par le biais d'un dispositif selon l'une quelconque des revendications de 1 à 9.
